# EUROPEAN PATENT APPLICATION

(11) **EP 1 199 509 A2**
(43) Date of publication of application: **24.04.2002**
(21) Application number: 01124575.0
(22) Date of filing: 15.10.2001
(51) Int. Cl.: F16P 1/02

(54) **Improvements to guarding apparatus**

(30) Priority: 17.10.2000 GB 0025393
(71) Applicant: Procter Bros Ltd, Caerphilly CF83 8XD (GB)
(72) Inventor: Procter, Jeremy C A, Bedwas, Caerphilly CF83 8XD (GB)
(74) Representative: Wood, Graham

(57) **Abstract**

Machinery Guarding apparatus and a clamping device (2) for the same is provided in a modular arrangement and is easily fitted and adaptable by the user to individual requirements. The guarding includes a clamping device (2) which allows the guarding components (302,306,308) to be fitted and held together with the clamping device (2) allowing a plurality of components to be selectively positioned radially depend therefrom in a plurality of different directions.

## Description

This invention relates to improvements in guarding apparatus of the type particularly, although not necessarily, used to guard potentially dangerous machinery.

Although the following description refers almost exclusively to machinery guarding formed by joining machinery guard panels together, it should be understood by persons skilled in the art that components of the guarding of the present invention can be used for a number of different applications for the joining of two or more components.

Machinery guard panels are typically used around the perimeter of machinery or work areas for health and safety reasons. The panels can be used to provide a masking structure to minimise the risk of injury from debris from the machine and prevent unauthorised persons gaining access to the machine, and can include a number of different forms depending on the requirements of the user. For example, the guard can be provided with windows therein, wire meshing, doorways and/or the like. The guarding requirements of each user are typically different depending on the application to which the guarding is to be put and/or the type and size of the machinery or work area in which the guarding is being used. As such, the machinery guards have conventionally been made and welded together in an arrangement according to the individual needs of the user. This typically involves using a specialist to design and fit the guards, which can be both expensive and time consuming. Alternatively, the user may need specialist training in order to weld and fit the guard parts together which is undesirable. In addition, conventional guarding arrangements are not easily adaptable in the event of changes to the space requirements of machinery or work areas.

It is an aim of the present invention to provide machinery guarding which is adaptable to a user's individual needs and which is both quick and easy to assemble, and therefore be constructed by relatively unskilled personnel.

It is a further aim of the present invention to provide machinery guarding which is inexpensive to produce and fit together and which does not require specialist training for assembly of the same.

According to a first aspect of the present invention there is provided apparatus for protective guarding, said guarding comprising a number of components joined together to form the guarding structure, at least some of said components joined together using one or more clamping devices and characterised in that the clamping device includes a body portion having a location for the location of a base component therewith, securing means for engaging the body portion with the base component and one or more location means for the location of at least one further component therewith.

Preferably a number of location means are provided at spaced intervals on the clamping device such that the one or more further components can be located on said clamping device in a selected one of the location means.

The provision of a plurality of location means allows multi-directional clamping of components with the clamping device. Once the clamping device is fitted to the base component, the user can choose a location means on the device for the location of a further component such that it depends in a radial direction suitable for the user's guarding requirements. If the user's machinery guarding requirements change over time, the user can use more or different location means for the joining of or removal of components with the device, thereby allowing easy modification of their machinery guarding accordingly.

Preferably each location means comprises a channel having at least a first open end.

Preferably an entrance and/or exit of the channel is/are shaped to aid location of at least a portion of a component therewith.

In one embodiment the entrance and/or exit of the channel is/are provided at an angle of approximately 45 degrees relative to the channel.

In one embodiment the location means protrude outwardly from the body portion of the clamping device. In an alternative embodiment the location means are defined in the body portion of the clamping device.

In one embodiment the location means can be integrally formed with the body portion. In an alternative embodiment the location means can be welded or adhered to the body portion.

In a further embodiment the location defined by the body portion for the base component has first and second open ends and the base component passes through said open ends and is secured to the body portion. In an alternative embodiment the location defined by the body portion has a first open end and a second closed end.

Preferably the securing means includes two spaced apart substantially parallel members communicating with the body portion of the device. Each securing member typically has an aperture which is aligned with the aperture on the other securing member. A bolt or other means can be passed through the aligned holes and tightening of the bolt with a nut can bring the two spaced substantially parallel members together, thus adjusting the size of the aperture defined by the body portion and allowing clamping of a base component located in the said aperture with the clamping device.

In one embodiment the clamping device includes four location means, each spaced at 90 degrees to adjacent location means.

Preferably the base component is a rod to which further components are joined therewith using the clamping device.

Preferably the further components located with the location means include machine guard panels or attachments for the joining of machine guard panels

Preferably a cover is provided to hide/protect the clamping device and the base component when the two are secured together. The cover can be attached to a part of the base component, a further component and/or the clamping device via clips, screws, adhesive and/or the like.

According to a second aspect of the present invention there is provided a clamping device for clamping together two or more components to form machinery guarding, said clamping device including a body portion defining a location therein for the engagement of a base component and securing means for securing the body portion to the base component and characterised in that the device includes location means for the location of at least one further component therewith.

Preferably the location means are radially spaced on the device and the at least one further component when located with the same depends radially from the clamping device.

In one embodiment the clamping device forms part of a hinge arrangement for use with a door. In an alternative embodiment the clamping device forms part of a sliding arrangement for a slidable door.

In a further aspect of the invention there is provided modular guarding apparatus for machinery, said guarding apparatus comprising a number of base components spaced apart and a series of components in the form of panels located between and secured to the base components by clamping devices, said clamping devices including a location to allow the same to be engaged with the base component and a series of spaced location means with which said panel component can be selectively engaged.

In one embodiment the location means on the clamping device are angularly spaced such that the panel component can be selectively fitted to one of the same to define the angle of the panel component with respect to the base component.

Typically a plurality of the panel components are attached to the clamping devices.

An advantage of the present invention is that the guarding can be fitted together in a modular arrangement and is easily adaptable by the user to individual requirements. The clamping device of the invention allows the guarding components to be fitted together both quickly and easily and does not require the user to have any special skills or training. Furthermore the device of the present invention is inexpensive to produce.

A further advantage of the present invention is that the clamping device allows a plurality of components to radially depend therefrom in a plurality of different directions. Clamping devices can be provided to allow the fitting together of components in a pre-determined direction or the devices can be provided with a number of location means such that the user can choose the direction in which the component is to depend.

Embodiments of the present invention will now be described with reference to the accompanying Figures wherein:
Figure 1A is a perspective view of a clamping device according to an embodiment of the present invention;
Figure 1B is a plan view of the device in Figure 1A;
Figure 1C is a sectional view taken along line A-A in Figure 1B;
Figure 1D is a sectional view taken along line B-B;
Figures 2-3 are examples of use of the clamping device with door hinge arrangements;
Figures 4-5 are example of use of the clamping device with a sliding door arrangement;
Figure 6 illustrates the clamping device attached to a simple post;
Figure 7 is an example of machinery guarding according to the present invention;
Figure 8 is a further example of a clamping device in plan view according to the present invention.

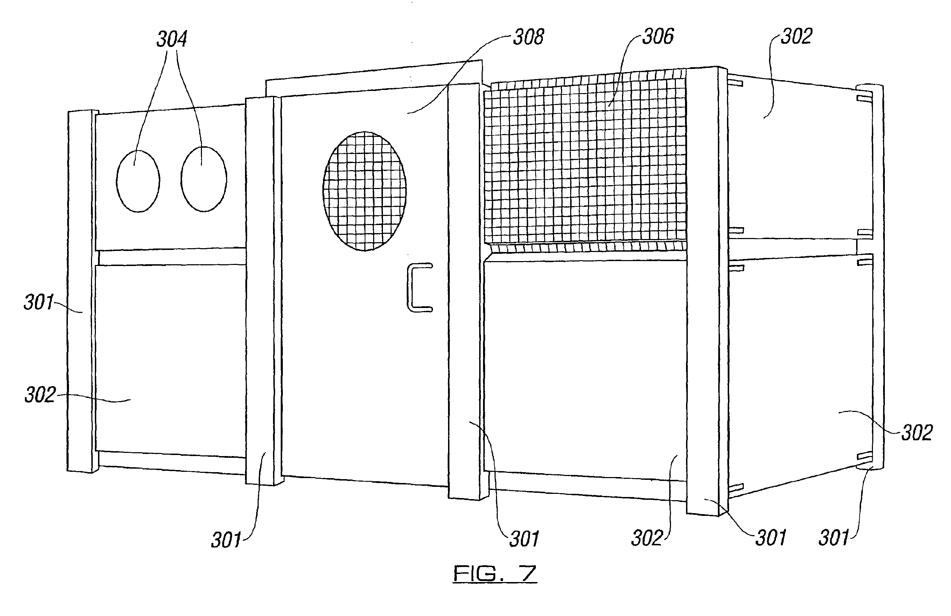

Referring firstly to Figure 7, there is illustrated an example of modular guarding according to the present invention. The guarding forms a fence type structure including a series of panel components and base components, and is typically used around machinery and work areas for health and safety reasons.

The panels of the machine guarding, as an example, can be plain panels 302, or, for example, they can include windows 304, wire meshing 306 or doors/gateways 308.

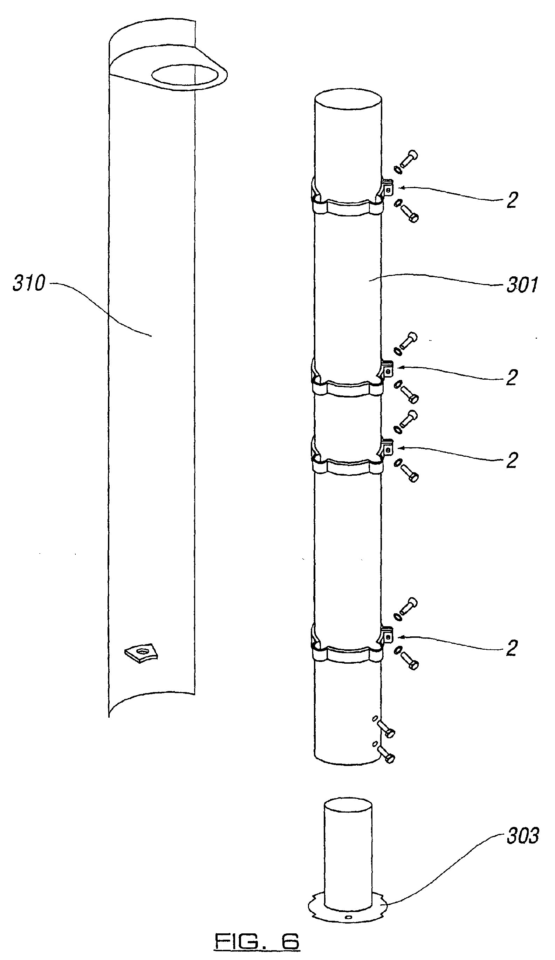

The panels are secured to base components in the form of posts 301 using clamping devices 2 to provide the fence type structure. Figure 6 shows a number of clamping devices 2 secured to a base component 301 at spaced intervals along the length thereof. The clamping devices 2 can be fitted to the post at a required height. An adjustable foot member 303 can be provided at the base of the post 301 to adjust the height of the post to the required height.

Covers 310 can be provided over the posts 301 to protect and hide clamping devices and other attachment means by which the panels and posts are joined together. The covers can be screwed to the posts, adhered thereto, clipped on and/or the like.

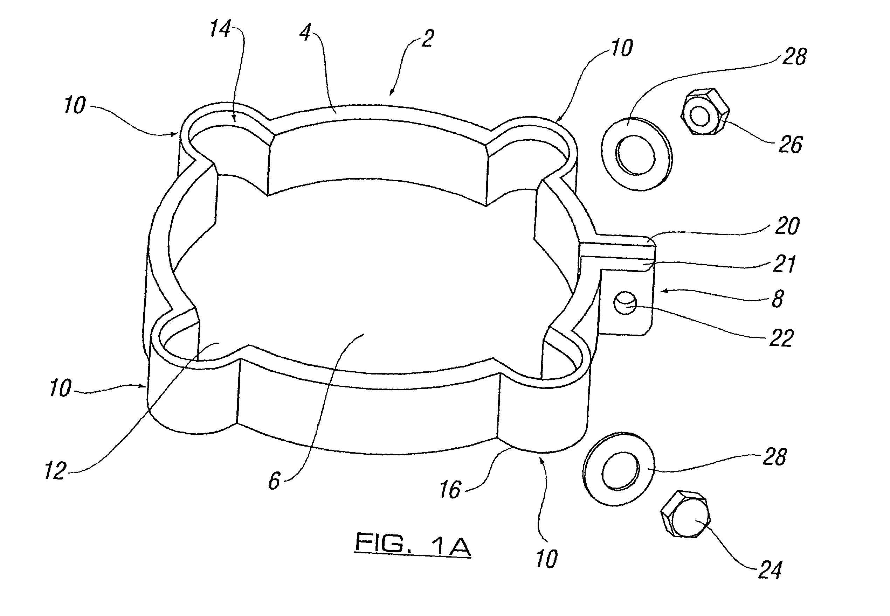

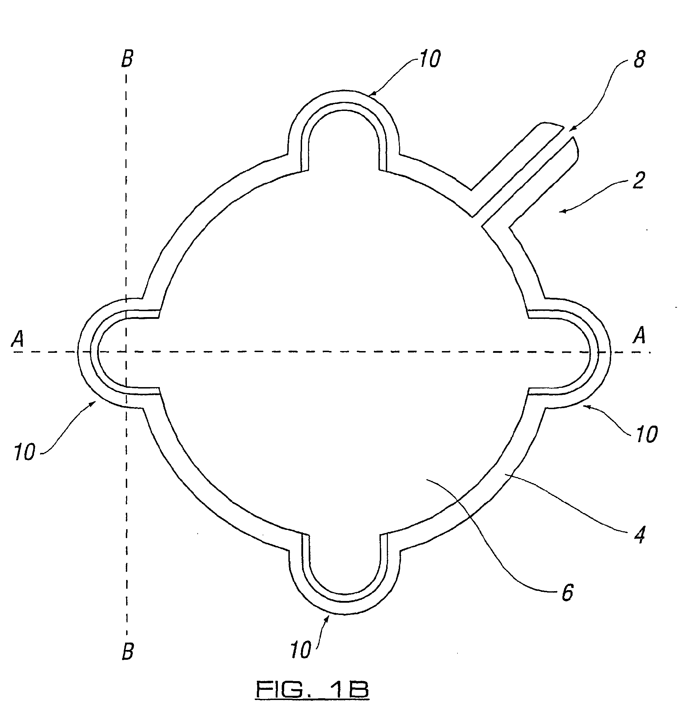

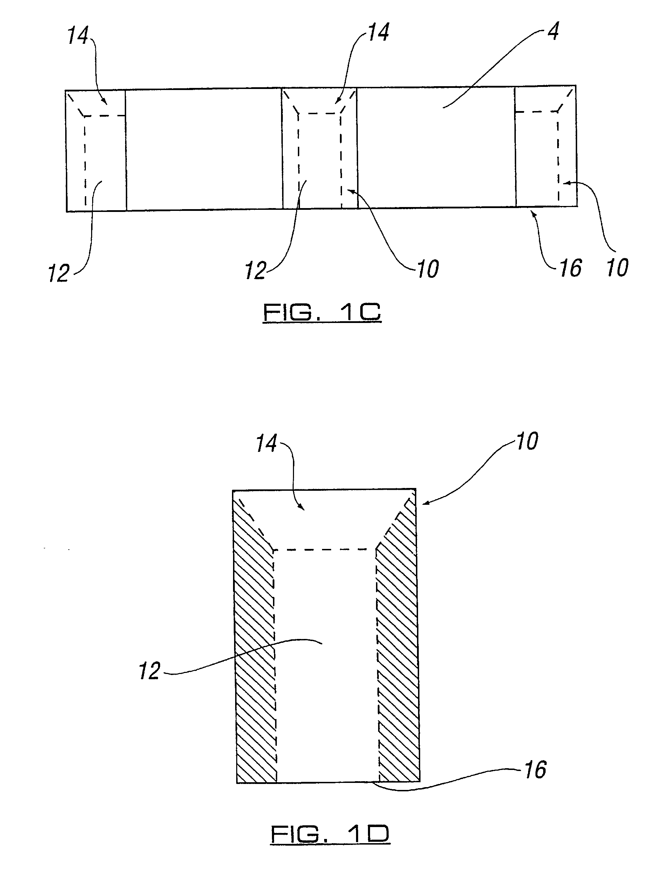

Referring now to Figures 1A - 1D, there is illustrated a clamping device 2 in detail. The clamping device 2 comprises a body portion 4 defining a location in the form of an aperture 6, securing means 8 to allow the body portion 4 to be secured to a base component 301 located in the column 6 and location means 10 to allow further components, such as panels, to be selectively positioned and secured thereto.

The location means 10 each include a channel 12 protruding from the body portion 4. Each channel 12 has a first shaped entrance end 14 to allow easy location of a portion, typically a hook portion, rod or other appropriately formed member, of a component therein and a second end 16.

The location means 10 depend radially from the body portion at spaced locations and allow a number of components to be fitted thereto and depend radially from the clamping device.

It will be understood by a person skilled in the art that any number of location means can be provided on the clamping device depending on the range of the numbers of different components required to be fitted to the same and the range of angles required for the different components to be positioned relative to other components. As such, it will be understood that the clamping device of the present invention allows for the modular assembly of two or more components.

The securing means 8 of the device 2 comprises two spaced apart members 20 and 21 with aligned apertures 22 passing through the same. A bolt 24 is placed through apertures 22 and tightening of a nut 26 with the bolt 24 draws members 20 and 21 together to produce a clamping force of device 2 to post 18. The nut 26 and bolt 24 include washers 28.

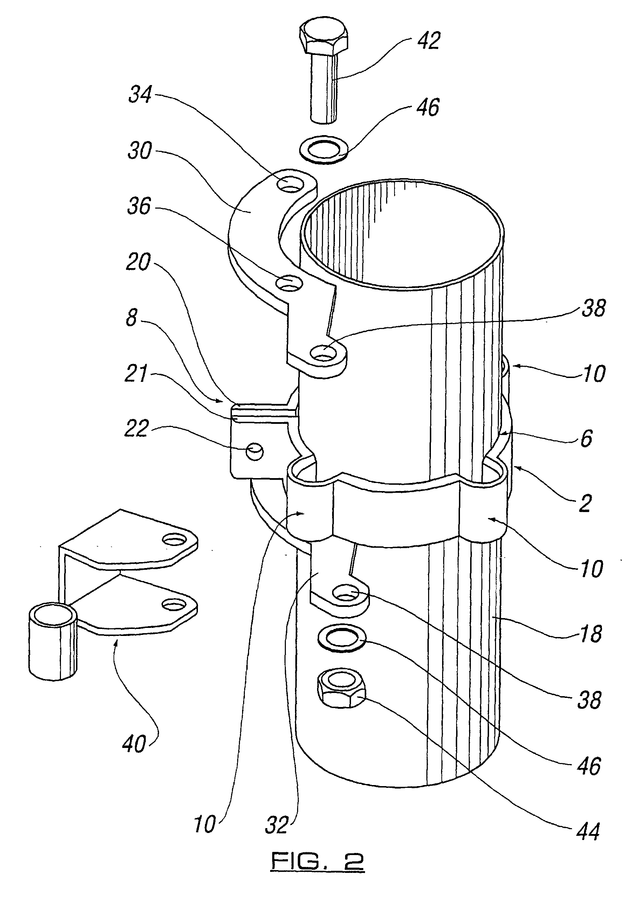

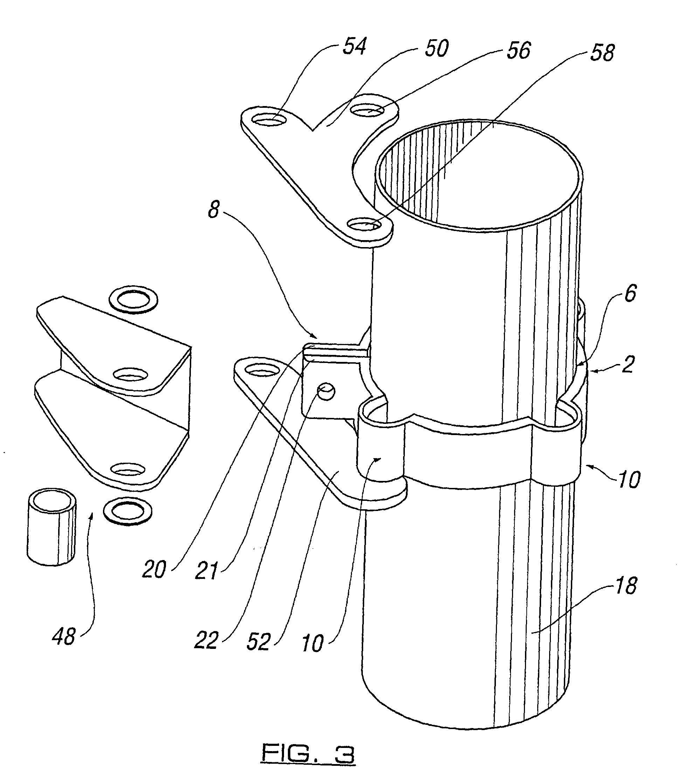

Referring now to Figures 2-5, there are illustrated examples of a number of different applications in which the clamping device can be used. Figures 2 and 3 illustrate use of the clamping device as part of a door hinge assembly. The clamping device 2 is placed around a base component in the form of a post 18 of a door (not shown) such that the post 18 passes through the aperture 6 of device 2.

Door hinge attachment plates 30 and 32 in Figure 2 are placed above and below location means 10 of the clamping device 2. The hinge plates 30 and 32 each have corresponding apertures 34, 36 and 38. The apertures 34 and 36 are spaced a distance apart corresponding to the spaced distance of the location means 10 on the clamping device 2, such that bolts can pass through the apertures 34 and 36 and through channel 12 of the location means, and a nut can be used to clamp the components 30, 32 and 2 together. A hinge arrangement 40 can then be secured to aperture 38 via bolt 42, nut 44 and washers 46.

Figure 3 shows a different hinge arrangement 48 being used with the clamping device 2. The door hinge attachment plates 50 and 52 are a different shape and the apertures 54, 56 and 58 are spaced at different intervals to the apertures 34, 36 and 38 of figure 2. However, the principle of attachment of the plates 50 and 52 to the location means 10 of device 2 is the same as in figure 2.

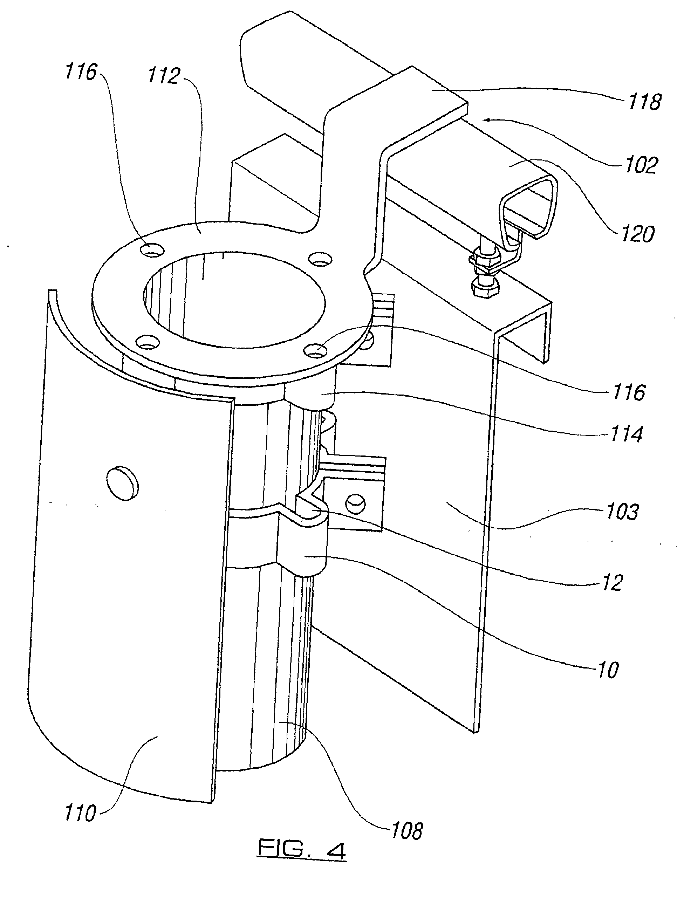

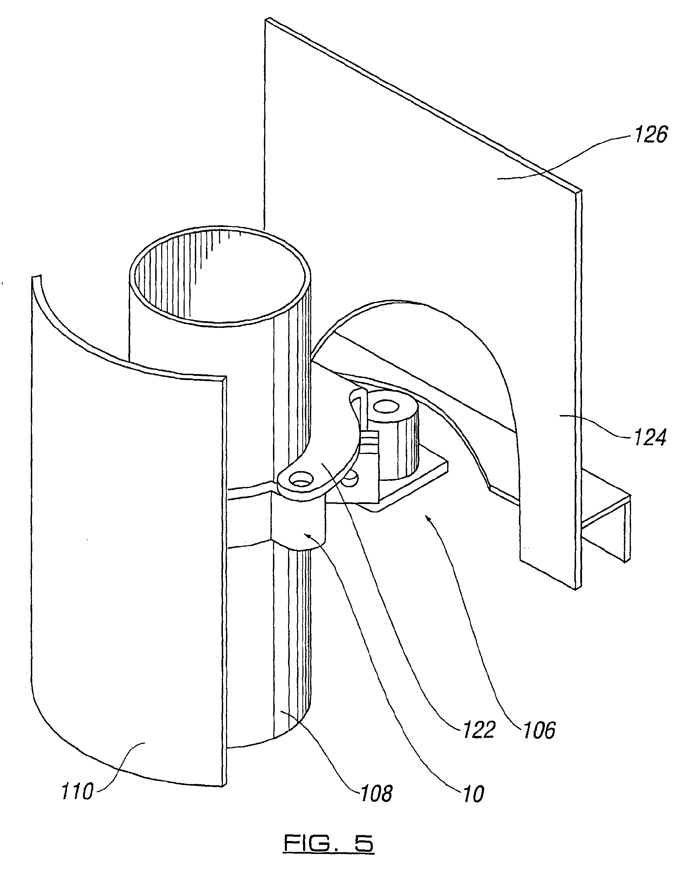

Figures 4 and 5 show the clamping device 2 being used with a sliding door arrangement. Figure 4 illustrates a guide 102 for the lintel 103 of a sliding door and figure 5 illustrates a guide 106 for the bottom of a sliding door.

The clamping device is again attached to a base component acting as a door post 108. A cover 110 can be attached to the door post to improve the aesthetic appearance of the same and to hide/protect the clamping device 2 and other attachment members.

Referring to Figure 4, a further clamping device 112 is positioned with clamping device 2. The further device 112 has location portions 114 corresponding to location means 10. The channels 12 of the location means 10 can be aligned with corresponding channels 116 on location portions 114. Nuts and bolts can be used to secure location means 10 to locations portions 114.

The further clamping device 112 has a slidable portion 118 which can slide along a rail 120 above the doorway.

Referring to Figure 5, the guide 106 includes an attachment component 122 for attachment with the location means 10 of the clamping device 2. The guide 106 is movable along runner 124 forming part of the door frame surround 126.

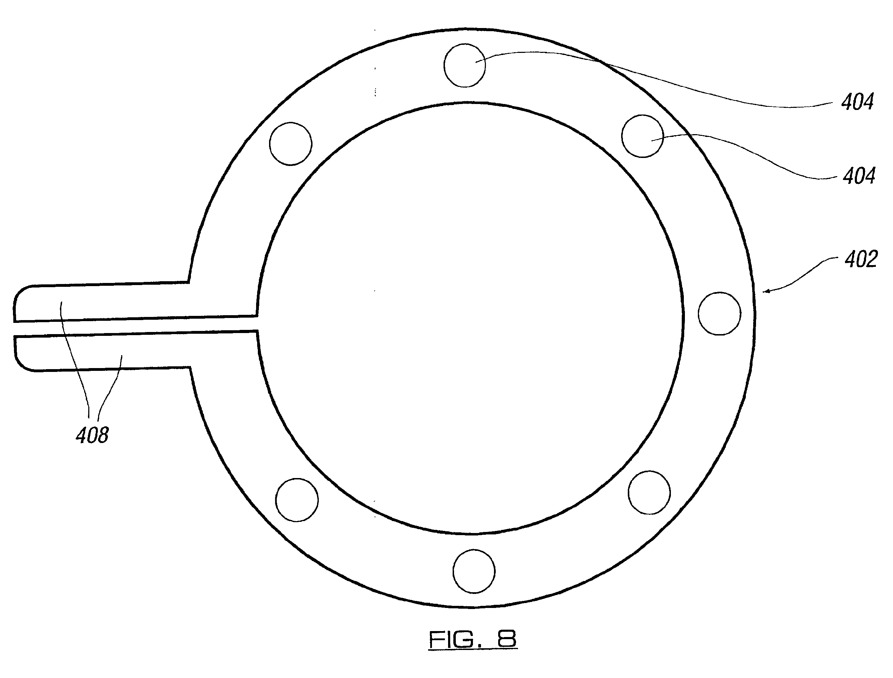

The clamping device can include a number of different location means and Figure 8 illustrates a different clamping device 402 with location means in the form of apertures 404 passing through the body portion 406. Securing means 408 are also provided to allow the clamping device to be attached to a first component.

In whichever embodiment of the clamping device there is no requirement for all the location means to be used at any one time and so selective attachment of the further components is possible. In addition, the location means and/or securing means of the clamping device can be secured to other components in addition to, or as an alternative to nuts and bolts via hook means, threaded screws and/or the like.

The guarding and clamping device according to the present invention allows a user to purchase a variety of different components such as panels, doors and easily fit the same together in a desired arrangement without the requirement for specialist training, welding or other specialist equipment. Furthermore as the apparatus is modular the guarding can be provided to suit particular user requirements and configurations and can be allowed to suit changes in requirements over time.

Thus it can be seen from the above description that the present invention provides modular machinery guarding and a clamping device for multi-directional clamping.

## Claims

1. Apparatus for protective guarding, said guarding comprising a number of components joined together to form the guarding structure, at least some of said components joined together using one or more clamping devices and **characterised in that** the clamping device includes a body portion having locations for the location of a base component, therewith securing means for engaging the body portion with the base component and one or more location means for the location of at least one further component therewith.

2. Apparatus according to claim 1 **characterised in that** a number of location means are provided at spaced intervals on the clamping device such that the one or more further components can be located on said clamping device.

3. Apparatus according to claim 2 **characterised in that** the provision of a plurality of location means allows multi-directional clamping of components therewith.

4. Apparatus according to claim 1 **characterised in that** when a plurality of location means are provided, the component secured thereto depend radially from the clamping device.

5. Apparatus according to claim 1 **characterised in that** the clamping device is fitted to the base component and the user can choose a location means on the device for the location of a further component such that it depends in a radial direction suitable for the user's guarding requirements.

6. Apparatus according to claim 1 **characterised in that** if the guarding configuration requirements change over time, the user can use more or different location means on the clamping device for the joining of or removal of components with the device, thereby allowing modification of the guarding accordingly.

7. Apparatus according to claim 1 **characterised in that** the clamping device location means comprise a channel having at least a first open end.

8. Apparatus according to claim 7 **characterised in that** an entrance and/or exit of the channel is/are shaped to aid location of at least a portion of a component therewith.

9. Apparatus according to claim 8 **characterised in that** the entrance and/or exit of the channel is/are provided at an angle of approximately 45 degrees relative to the channel.

10. Apparatus according to claim 1 **characterised in that** the location means protrude outwardly from the body portion of the clamping device.

11. Apparatus according to claim 1 **characterised in that** the location means are defined within the body portion of the clamping device.

12. Apparatus according to claim 1 **characterised in that** the location means are joined to the body portion of the clamping device.

13. Apparatus according to claim 1 **characterised in that** the base component location is an aperture defined by the body portion with first and second open ends and the base component passes through said open ends and is secured to the body portion.

14. Apparatus according to claim 1 **characterised in that** the aperture defined by the body portion has a first open end and a second closed end.

15. Apparatus according to claim 1 **characterised in that** the securing means includes two spaced apart substantially parallel members communicating with the body portion of the device.

16. Apparatus according to claim 15 **characterised in that** a bolt or other means passes through the securing members and tightening of the bolt with a nut brings the two securing members together, thus adjusting the size of the location defined in the body portion for the base component and engaging the same in the clamping device..

17. Apparatus according to claim 1 **characterised in that** the clamping device includes four location means, each spaced at 90 degrees to adjacent location means.

18. Apparatus according to claim 1 **characterised in that** the base component is a rod to which further components are joined therewith using the clamping device.

19. Apparatus according to claim 1 **characterised in that** the further components located with the location means are guard panels.

20. Apparatus according to claim 1 **characterised in that** a cover is provided to protect the clamping device and the base component when the two are secured together.

21. A clamping device for clamping together two or more components, to form machinery guarding, said clamping device including a body portion defining a location for the engagement of a base component and securing means for securing the body portion to the base component and **characterised in that** the device includes location means for the location of at least one further component therewith.

22. A device according to claim 21 **characterised in that** the location means are radially spaced on the device and the at least one further component, when located with the same, depends radially from the clamping device.

23. A device according to claim 21 **characterised in that** the clamping device forms part of a hinge arrangement for use with a door.

24. A device according to claim 21 **characterised in that** the clamping device forms part of a sliding arrangement for a slidable door.

25. Modular guarding apparatus for machinery, said guarding apparatus comprising a number of base components spaced apart and a series of components in the form of panels located between and secured to the base components by clamping devices, said clamping devices including a location to allow the same to be engaged with the base component and a series of spaced location means with which said panel components can be selectively engaged.

26. Modular guarding apparatus for machinery according to claim 25 **characterised in that** the location means on the clamping device are angularly spaced such that the panel component can be selectively fitted to one of the same to define the angle of the panel component with respect to the base component.

27. Modular guarding apparatus for machinery according to claim 25 **characterised in that** a plurality of panel components are attached to the clamping devices.
